# EUROPEAN PATENT APPLICATION

(11) **EP 3 828 775 A1**
(43) Date of publication of application: **02.06.2021**
(21) Application number: 20197345.0
(22) Date of filing: 22.09.2020
(51) Int. Cl.: G06N 3/04, G06N 3/063

(54) **ENERGY EFFICIENT COMPUTE NEAR MEMORY BINARY NEURAL NETWORK CIRCUITS**

(30) Priority: 27.11.2019 US 201916697616
(71) Applicant: INTEL Corporation, Santa Clara, CA 95054 (US)
(72) Inventor: KNAG, Phil, Santa Clara, CA California 95054 (US); CHEN, Gregory K., Santa Clara, CA California 95054 (US); KUMAR, Raghavan, Santa Clara, CA California 95054 (US); SUMBUL, Huseyin, Santa Clara, CA California 95054 (US); KRISHNAMURTHY, Ram, Santa Clara, CA California 95054 (US)
(74) Representative: Rummler, Felix

(57) **Abstract**

A compute near memory binary neural network accelerator with digital circuits that achieves energy efficiencies comparable to or surpassing a compute near memory binary neural network accelerator with analog circuits is provided. The compute near memory binary neural network accelerator with digital circuits is more process scalable, robust to process, voltage and temperature variations, and immune to circuit noise.

## Description

### FIELD

This disclosure relates to neural networks and in particular to optimizing the energy efficiency of binary neural network circuits.

### BACKGROUND

Deep learning is an approach to artificial intelligence using neural networks. A neural network has a plurality of interconnected processing nodes that provide a means for performing machine learning by analyzing examples. For example, an object recognition system may analyze thousands of images of objects (for example, trucks) so that it can learn to find visual patterns in an image to identify the object.

Neural networks may be organized into layers of nodes, and data may move through the neural network. An individual node may be connected to several nodes in the layer beneath it, from which it receives data, and several nodes in the layer above it, to which it sends data.

A node assigns a number known as a "weight" to the connection in the neural network. When the neural network is active, the node receives a data item (number) from its connections and multiplies it by the associated weight. The node then adds the resulting products together, yielding a single result (number). The node passes the result (the sum of the products) through an activation function (non-linear function) and forwards the result to the outgoing connections of the node.

In a deep learning system, a neural network model is stored in memory and computational logic in a processor performs multiply-accumulate (MAC) computations on the parameters (for example, weights) stored in the memory. Data transfer between memory and the processor is an energy-intensive process and can consume up to 90% of the power in machine learning workloads.

A traditional computing architecture, known as a von Neumann architecture, software requires data transfers between separate computational logic in a processor (for example a Central Processing Unit (CPU)) and memory. The von Neumann architecture creates a bottleneck for machine-learning applications that require many data transfers between the processor and memory. In addition, data transfer between memory and the processor is an energy-intensive process.

### BRIEF DESCRIPTION OF THE DRAWINGS

Features of embodiments of the claimed subject matter will become apparent as the following detailed description proceeds, and upon reference to the drawings, in which like numerals depict like parts, and in which:
Fig. 1 is a block diagram of an image classifier;
Fig. 2 is a block diagram of a Binary Neural Network accelerator in the image classifier shown in Fig. 1 that leverages compute near memory (CNM) techniques to maximize energy efficiency;
Fig. 3 is a block diagram illustrating a portion of one of the wide vector inner product execution units shown in Fig. 2;
Figs. 4A-E illustrate an example of a striding operation in the image classifier shown in Fig. 1;
Fig. 5 illustrates a memory map for memory banking to enable single cycle access to a 2x2 window;
Figs. 6A-E illustrate an example of a striding operation with a snake pattern in the image classifier shown in Fig. 1; and
Fig. 7 is a block diagram of an embodiment of a Binary Neural Network accelerator with high parallelism;
Fig. 8 is a flowgraph illustrating an embodiment of a method to provide an energy efficient binary neural network circuit; and
Fig. 9 is a block diagram of an embodiment of a computer system that includes the image classifier.

Although the following Detailed Description will proceed with reference being made to illustrative embodiments of the claimed subject matter, many alternatives, modifications, and variations thereof will be apparent to those skilled in the art. Accordingly, it is intended that the claimed subject matter be viewed broadly, and be defined as set forth in the accompanying claims.

### DESCRIPTION OF EMBODIMENTS

Image classification is the process of assigning a class to an image, for example, assigning a car class to an image or a probability that the image is a car. A convolutional neural network (CNN) is a fundamental visual processing building block for image and video processing, critical for applications ranging from self-driving autonomous cars to security and surveillance.

A convolutional neural network is a deep learning model that can be used for image classification. A convolutional neural network has an input layer, an output layer and hidden layers. The hidden layers can include convolutional layers, rectified linear activation layers, pooling layers and fully connected layers.

The convolutional neural network uses convolution layers and pooling layers for feature abstraction from an input image. The layers of a convolutional neural network have neurons arranged in three dimensions: width, height, and channels. Processing a convolution layer is typically based on performing a convolution operation using a NxNxC weight filter (also referred to as a kernel). A weight filter in a convolutional neural network layer has three dimensions width (N), height (N), and channels (C). For example, a color input image has three channels (red, green, blue). A given layer can also contain multiple weight filters. The number of channels in the output of a convolutional neural network layer is equal to the number of filters.

The weight filter is shifted by a stride (one or more pixels) over an input image (also referred to as a layer) to provide an output image. In each position, the values in the filter are multiplied by the values in the subregion in the input image.

One type of pooling layer that is used by the convolutional neural network is max-pooling. Max-pooling is a technique used to reduce the dimensions of an input image by selecting the maximum pixel value in a subregion of the input image. A filter of size mxm pixels is shifted by a stride. In each position, the maximum pixel value in each subregion that the filter convolves around in the input image is output.

The values in the subregion in the input image (also referred to as activations) and the values in the filter (also referred to as weights) of a convolutional neural network can be floating point values, fixed point values, or multi-bit integers. The activations and weights are binarized in a Binary convolutional neural networks (also referred to as a Binary Neural Network or Binarized Neural Network). The activations and weights can be one of two binary values: +1, -1 that can be encoded with a 0 for -1 and a 1 for +1. Performing an Exclusive NOR (XNOR) operation on the binary encodings (0, 1) is equivalent to performing multiplication on the binary values (-1, 1).

Binary Neural Networks reduce a multiplier to a single gate operation for efficient computation, and significantly lower memory bandwidth requirements. These memory and computational advantages allow for orders of magnitude greater energy efficiency compared to floating point, fixed point, and multi-bit integer based neural networks.

When using Binary Neural Networks, the cost of memory access relative to computation is significantly increased because of the lower cost of computation. For a target energy efficiency of 1000 Tera Operations Per Second (TOPs) per watt based on Static Random Access Memory (SRAM) or register file access with no data reuse, , memory access consumes ten to a hundred times more energy than a multiplication. Similarly, the cost of data movement is also significant compared to the cost of computation. For example, the energy cost of a multiplication operation is approximately equal to the cost of moving a bit 25 micrometers (µm). The cost of memory access and data movement is just as critical as optimizing the energy efficiency of an execution unit.

A Binary Neural Network accelerator can use analog or digital circuits for computation. The analog circuit can include switch capacitors to perform analog addition to accumulate the results of binary multiplication which are passed through a comparator to digitize the analog value to a one-bit digital value.

However, analog circuits are more sensitive to process, voltage, temperature variations when compared to digital circuits. Analog circuits are also typically more difficult to scale with process technologies. Analog circuits are more vulnerable to circuit noise and can produce nondeterministic outputs because of noise sources and low noise margins. Also, analog circuits do not allow for arbitrarily large dot product sizes because precision limitations caused by circuit noise and device mismatch. A dot product is a scalar value that is the result of an operation of two equal length sequences of numbers called vectors.

In an embodiment, a compute near memory binary neural network accelerator with digital circuits achieves energy efficiencies comparable to or surpassing a compute near memory binary neural network accelerator with analog circuits. The compute near memory binary neural network accelerator with digital circuits is also more process scalable, robust to process, voltage, temperature (PVT) variations, and immune to circuit noise. The compute near memory binary neural network accelerator with digital circuits utilizes multiple circuit design techniques for energy efficient operation such as compute near memory design principles, multiple voltage domains with clock skew tolerant pipelining, Near Threshold Voltage operation, lightweight pipelining for maximum Near Threshold Voltage energy efficiency, and energy balanced memory/interconnect/compute utilizing highly parallel execution units.

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

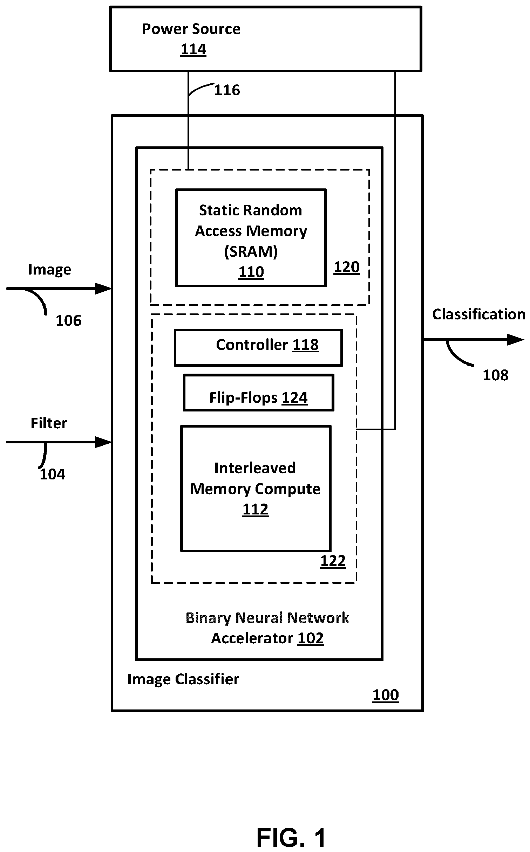

Fig. 1 is a block diagram of an image classifier 100 that includes a Binary Neural Network accelerator 102. The Binary Neural Network accelerator 102 includes a Static Random Access Memory (SRAM) 110 to store an input image 106 and a controller 118 to move portions of the input image 106 from the static Random Access Memory 110 to interleaved memory compute 112 for processing. The Binary Neural Network accelerator 102 uses filters 104 for feature abstraction from the input image 106 to provide a classification 108 for the input image 106. An image classifier application can be implemented as instructions programmed into the controller 118.

Compute near memory reduces the cost of memory access and data movement by tightly interleaving memory with computational units. The interleaved memory compute structure increases the effective bandwidth between the compute units and memory and reduces data movement. Typically, compute near memory techniques involves breaking a large Static Random Access Memory (SRAM) array into smaller memory banks that are distributed evenly with compute blocks. However, in a Binary Neural Network, energy consumed to move data is significant compared to the cost of computation because the Binary Neural Network multiplier is implemented as Exclusive-NOR (XNOR).

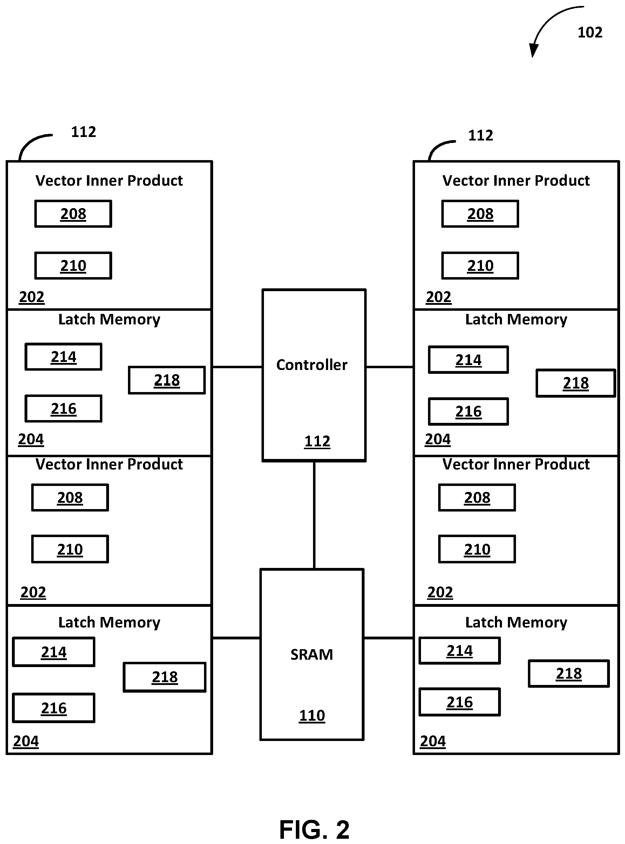

Fig. 2 is a block diagram of the Binary Neural Network accelerator 102 in the image classifier 100 of Fig. 1 that leverages compute near memory (CNM) techniques to maximize energy efficiency.

The Binary Neural Network accelerator 102 is implemented as a two level hierarchy with a static Random Access Memory 110 and controller 118 surrounded by an interleaved memory compute 112 that includes a latch-based Compute Near Memory array 204 interleaved with wide vector inner product execution units 202. The latch-based Compute Near Memory array 204 can also be referred to as a near memory latch array. A set of weights is stored in vector latches 208, 210 located in the inner product execution units 202. The set of weights can be reused many times over the course of the convolution operation. Storing two sets of weights in vector latches 208, 210 allows for 2 times more input data reuse compared to a single set of weights, and also reduces the input energy/switch-activity by a factor of 2.

To reduce energy consumption to move the data and enable a high bandwidth memory access to the plurality of execution units, memory is implemented as a latch-based Compute Near Memory array 204 instead of a Static Random Access Memory. The latch-based Compute Near Memory array 204 that includes sets of bit latches 214, 216 is interleaved with computational units that include wide vector inner product execution units 202. A vector inner product is the dot product of the co-ordinates of two vectors.

In an embodiment, the SRAM 110 has 129 Kilo Bytes (KB), each of the vector latches 208, 210 and the sets of bit latches 214, 216 has 1024 bits, there are 128 inner product execution units 202 and each wide vector inner product execution unit 202 has 1024 elements. The number of operations (add or multiply) performed per cycle with N inner product execution units that are M wide containing L sets of latches is 2^{∗}N^{∗}M. The number bits read from the static Random Access Memory 110 per cycle (with no striding data reuse) is M/L. The number of operations performed per bit is 2^{∗}N^{∗}L. In this embodiment (N=128, M=1024, L=2), 512 bits are read from the static Random Access Memory 110 each cycle to perform 256K operations each cycle, and the number of operations per bit is 512. In general, the choice of N, M, and L for a specific system should be chosen such that the number of operations per bit is at least 128 or greater (2^{∗}N^{∗}L>128) for an energy efficient design. A number of operations performed per bit read from the memory is greater than or equal to 128 to optimize for energy efficiency by amortizing cost of memory access and data movement across many binary neural network operations.

In an embodiment, two sets of 1024 bit latches 214, 216 are allocated to each wide vector inner product execution unit 202. The two sets of 1024 bit latches 214, 216 are communicatively coupled to each of the plurality of wide vector inner product execution units 202 to store a result of a computation in the wide vector inner product execution unit 202. The output of each set of 1024 bit latches 214, 216 is input to a 2:1 multiplexer 218 to select the output of one of the 1024 bit latches in the set of 1024 bit latches to input to the next computational unit that includes wide vector inner product execution units 202. The two sets of 1024 bit latches 214, 216 balance the tradeoff between reducing the activation memory energy/bandwidth and the energy cost of adding multiplexer 218 to the data path. The energy consumed by a multiplexer 218 is comparable to a binary multiply operation. In other embodiments, there can be more than two sets of 1024 bit latches 214, 216 and more than one multiplexer 218.

Area efficient design is also critical for energy efficiency. Reducing area reduces the distance of data movement between the sets of latches in latch-based Compute Near Memory array 204 and the wide vector inner product execution units 202. A wide vector inner product execution unit 202 has a higher compute density (Tera Operations Per Second (TOPS)/mm2) compared to an outer product execution unit. Vector latches are used in place of standard latches to further increase area efficiency of local weight memory storage. In addition, the memory footprint is reduced by reusing a local activation memory to store both intermediate inputs and output activations of a single layer. After a layer of operations is completed, previous input activations can be freed and reused to store the incoming output activations of a new layer. This recycling of the activation memory results in a reduction in activation memory proportional to the number of layers in the binary neural network to significantly reduce the size and cost of activation of memory access.

The energy of data movement is reduced by decreasing average data bandwidth between memory and execution units. The highly parallel design with wide vector inner product execution units and two sets of local weights per execution unit has high input and weight reuse which in turn decreases the required bandwidth between the memory and execution units. Incorporating very wide execution units to reduce the required output bandwidth by using accumulation to reduce the total number of outputs.

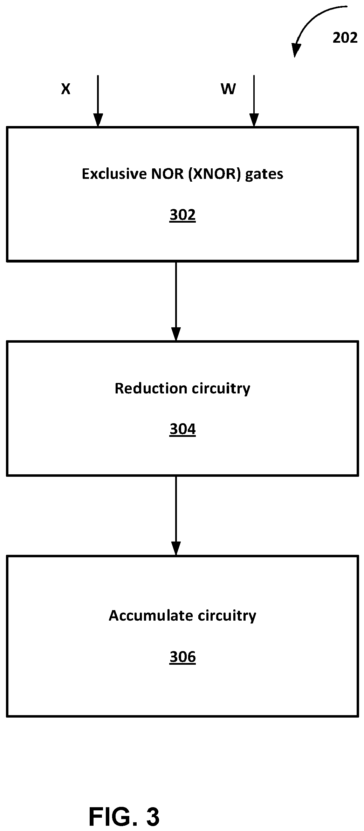

Fig. 3 is a block diagram illustrating an embodiment of one of the wide vector inner product execution units 202 shown in Fig. 2. An inner product is a method to multiply two vectors, with the result of the multiplication being a scalar. The scaler result is the dot product of the co-ordinates of two vectors.

In the example shown in Fig. 3, 1024 bit data vector X and 1024 bit weight vector W are multiplied by performing an Exclusive NOR operation in Exclusive NOR gates 302 and reducing the result of the Exclusive NOR operations outputs in reduction circuitry 304. The result of the reduction of the Exclusive NOR operations from reduction circuitry 304 is stored in accumulate circuitry 306. In an embodiment, the scaler result is 10 bits and an additional bit (a sign-bit) is used to store the sign of the 10-bit scaler result. The wide vector inner product execution unit 202 shown in Fig. 3 amortizes the cost of the 16 bit accumulate across many operations while also minimizing data movement per operation to provide the scalar result.

The outer product of two coordinate vectors is a matrix. If the two vectors have dimensions n and m, the outer product is an n × m matrix. The wide vector inner product execution unit 202 is about 4 times more energy efficient and about 5 times more area efficient when compared with an outer product execution unit.

Data reuse and low data movement are critical for an energy efficient Binary Neural Network accelerator. High parallelism is required to create a system that balances the energy of memory access with computation. Data reuse is a way of describing how a memory access is shared across multiple operations to create a balanced system. When using Binary Neural Networks, the cost of memory access relative to computation is significantly increased because of the lower cost of computation.

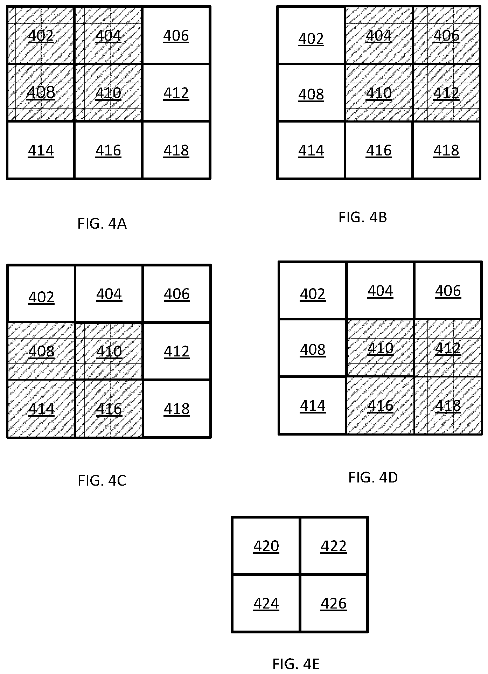

Figs. 4A-E illustrate an example of a striding operation in the image classifier 100 shown in Fig. 1. In the example shown, the stride is one and a 2x2 convolutional kernel is moved by the stride using a raster scan memory access pattern over a 3x3 input image from left to right. The intersection of the weight kernel with the image represents a single vector dot product with a scalar output.

Referring to Fig. 4A, the 2x2 convolutional kernel is over input data 402, 404, 408 and 410 in the 3x3 input image. The result of the dot product of the 2x2 kernel with input data 402, 404, 408 and 410 is represented as scalar output 420 in Fig. 4E.

Referring to Fig. 4B, the 2x2 convolutional kernel is over input data 404, 406, 410 and 412 in the 3x3 input image. The result of the dot product of the 2x2 kernel with input data 404, 406, 410 and 412 is represented as scalar output 422 in Fig. 4E. When the stride is 1, 2 consecutive moving window operations share 50% of the same input data. Referring to Fig. 4A and Fig. 4B, both include input data 404 and input data 410.

Referring to Fig. 4C, the 2x2 convolutional kernel is over input data 408, 410, 414 and 416 in the 3x3 input image. The result of the dot product of the 2x2 kernel with input data 408, 410, 414 and 416 is represented as scalar output 424 in Fig. 4E.

Referring to Fig. 4D, the 2x2 convolutional kernel is over input data 410, 412, 416 and 418 in the 3x3 input image. The result of the dot product of the 2x2 kernel with input data 410, 412, 416 and 418 is represented as scalar output 426 in Fig. 4E. When the stride is 1, 2 consecutive moving window operations share 50% of the same input data. Referring to Fig. 4C and Fig. 4D, both include input data 410 and input data 416. In order to reduce input memory access, the Binary Neural Network accelerator takes advantage of data reuse in the striding operation.

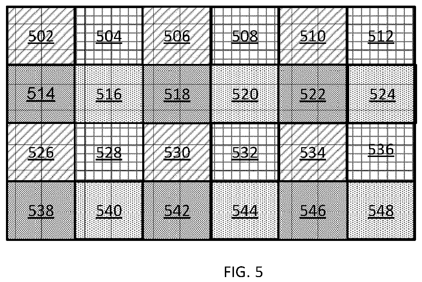

Fig. 5 illustrates a memory map for memory banking to enable single cycle access to a 2x2window. As discussed in conjunction with the example in Fig. 4, when the stride is 1, 2 consecutive moving window operations share 50% of the same input data.

To maximize the data reuse of input data, the input data can be stored in a plurality of memory banks, with each of the four inputs in a 2x2 window mapped to a different memory bank. In the width (6) x height (4) input data example shown in Fig. 5 which may be referred to as a checkerboard memory map, input data 502, 506, 510, 526, 530 and 532 are mapped to a first memory bank, input data 504, 508, 512, 528, 532 and 532 are mapped to a second memory bank, input data 514, 518, 522, 538, 542 and 546 are mapped to a third memory bank and input data 516, 520, 524, 540, 544 and 548 are mapped to a fourth memory bank.

Using this input storage pattern, any 2x2 window of the 6x4 input data shown in Fig. 5 can be accessed in a single memory read cycle, with each one of the four input data accessed from the respective memory bank. However, each consecutive cycle only needs to read from two memory banks because data can be reused from the previous cycle. For example, 2x2 window with input data 502, 504, 514 and 516 can be accessed in a single memory cycle. The checkerboard memory map requires no additional registers to achieve striding data reuse.

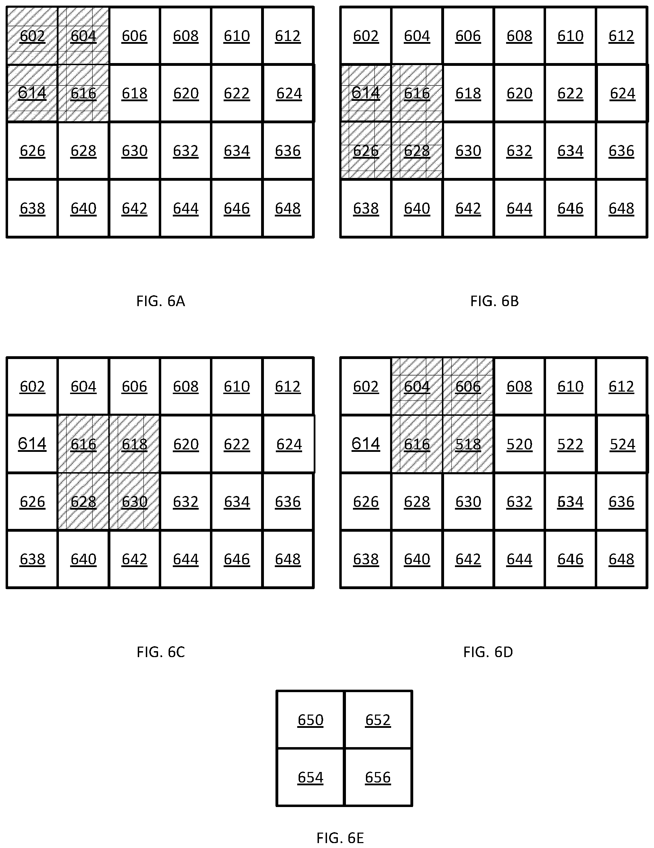

Figs. 6A-E illustrate an example of a striding operation with a snake pattern in the image classifier 100 shown in Fig. 1. In order to reduce input memory access, the Binary Neural Network accelerator takes advantage of data reuse in the striding operation. In the example shown, the stride is one and a 2x2 convolutional kernel is moved by the stride using a snake memory access pattern over the input image. A portion of the input image having a width of 6 and height of 4 is shown in Figs. 6A-6D. The intersection of the weight kernel with the input image represents a single vector dot product with a scalar output.

Referring to Fig. 6A, the 2x2 convolutional kernel is over input data 602, 604, 614 and 616 in the input image. The result of the dot product of the 2x2 kernel with input data 602, 604, 614 and 616 is represented as scalar output 650 in Fig. 4E.

Referring to Fig. 6B, the 2x2 convolutional kernel is moved down by the stride of one and is over input data 614, 616, 626 and 628 in the input image. The result of the dot product of the 2x2 kernel with input data 614, 616, 626 and 628 is represented as scalar output 652 in Fig. 6E. When the stride is 1, 2 consecutive moving window operations share 50% of the same input data. Referring to Fig. 6A and Fig. 6B, both include input data 614 and input data 616.

Referring to Fig. 6C, the 2x2 convolutional kernel is over input data 616, 618, 628 and 630 in the input image. The result of the dot product of the 2x2 kernel with input data 616, 618, 628 and 630 is represented as scalar output 654 in Fig. 4E.

Referring to Fig. 6D, the 2x2 convolutional kernel is over input data 604, 606, 616, and 618 in the input image. The result of the dot product of the 2x2 kernel with input data 604, 606, 616, and 618 is represented as scalar output 656 in Fig. 6E. When the stride is 1, 2 consecutive moving window operations share 50% of the same input data. Referring to Fig. 6C and Fig. 6D, both include input data 616 and input data 618.

By streaming the input data in a snake like pattern as opposed to the raster scan pattern as shown in Fig. 4, the data processing order is re-organized such the max-pooling operation can be performed in-between convolution operations with no additional latency or memory storage. The max-pooling operation to select the maximum pixel value in a subregion of the input image is merged into the convolution stage to remove the memory access energy (the access to Static Random Access Memory 110) of the max pooling stage. For example, in addition to computing the dot product of the 2x2 kernel with the input data in each position, a max-pooling operation is performed to output the maximum number in each 2x2 subregion that the filter convolves around in the image.

A standard binary neural network activation function is the sign operation. The operation performed by the max pooling layer is sign(max(a,b)), where a and b are inputs. The sign(max(a,b)) operation can be equivalently rewritten as max(sign(a),sign(b)). Instead of performing an operation using all bits of a and b to determine which of a or b is greater and then returning the sign of a or b, the operation is reduced to comparing the one-bit sign bit (Most Significant bit) of a and b.

The non-linear sign activation function can be used to reduce output bandwidth further by quantizing the 16 bit accumulator value to a single bit. An embodiment with 128 parallel execution units and inner product width of 1024 bits balances input and output memory bandwidth. The peak memory to execution unit bandwidth is 1024 bits per cycle. The peak execution unit to memory bandwidth is 256 bits per cycle.

### Circuit Optimizations

The Binary Neural Network accelerator 102 described in conjunction with Fig. 2 is a fully digital circuit. Near threshold voltage (NTV) operation is a key enabler of high energy efficiency of a fully digital circuit comparable to an analog circuit based design.

In general, near threshold voltage operation in an analog circuit is more difficult to exploit because the voltage headroom necessary for a functional analog circuit is relatively high. Near threshold voltage operation also increases the effects of threshold voltage device mismatch in an analog circuit. The dynamic energy of a digital circuit scales approximately quadratically with the supply voltage. In an embodiment of the image processor that uses the Binary Neural Network accelerator 102 that is fully digital, voltage scaling to near threshold voltage provides 2-3 times improvement in energy efficiency.

Returning to Fig. 1, to obtain the maximum benefit from voltage scaling, a separate power rail 116 from power source 114 provides a constant nominal voltage to the Static Random Access Memory 110 to maintain correct functionality, while the inner product execution units 202 in the Binary Neural Network accelerator 102 are scaled close to their true energy optimal point. Also, a highly parallel circuit maximizes the energy efficiency of near threshold voltage operation.

The energy optimal point occurs approximately when the dynamic energy equals the leakage energy. For digital arithmetic circuits, this point is typically near the subthreshold region. However, when a relatively large Static Random Access Memory 110 is added to a system, leakage power increases, the energy optimal operating voltage rises, and energy efficiency decreases. For near threshold voltage operation, the Static Random Access Memory leakage cost becomes more prominent because Static Random Access Memory 110 does not scale well to low voltage operation. Therefore, the leakage associated with Static Random Access Memory 110 is approximately constant.

A highly parallel circuit allows the relative cost of added memory leakage to amortize across the dynamic energy of many inner product execution units 202 (Fig. 2) to decrease the energy optimal voltage. In addition, as there are two voltage domains 120, 122 (Fig. 1), voltage scaling between the voltage domains can create skew between clock trees in the two voltage domains 120, 122 and introduce possible timing violations. Negative edge flip-flops 124 at the boundary of the two voltage domains 120, 122 prevent minimum delay hold violations from voltage scaling.

A lightly pipelined design is used to achieve maximum energy efficiency at near threshold voltage. At typical operating voltages well above the threshold voltage, pipelining increases performance at the nominal operating voltage and improves the energy efficiency by running at lower voltage with the same operating frequency. However, the energy optimal point is not significantly affected by pipelining because of the exponentially decreasing frequency of operation with NTV voltage scaling. For this reason, very lightweight pipelining is used throughout the Binary Neural Network Accelerator such that the energy cost of pipeline registers is only a small fraction of the Binary Neural Network Accelerator.

To approximate the energy improvement from lightweight pipelining, suppose a conventional design at a nominal operating voltage consumes 40% of its power in pipeline registers is re-pipelined with fewer stages such that only 10% of its power is in pipeline registers. In this scenario, the energy improvement at the optimal energy point is approximately 30%. This approximation leverages the fact that the optimal energy point voltage for a digital logic circuit on a given process is approximately the same. This optimal energy voltage lies in between Vdd and Vmin (the minimum functional operating voltage near the threshold voltage).

To amortize the cost of memory access and data movement, the parallelism required for a Binary Neural Network is higher than for a multi-bit accelerator. For example, in a typical 8 bit integer Neural Network accelerator with four 8 bit multiply accumulate (MAC) units, the cost of computation in the multiply accumulate units (MAC) is comparable to or ideally significantly greater than the combined cost of accessing Static Random Access Memory (SRAM) and moving the data from the SRAM through a bus or interconnect in parallel to the four 8 bit MAC units.

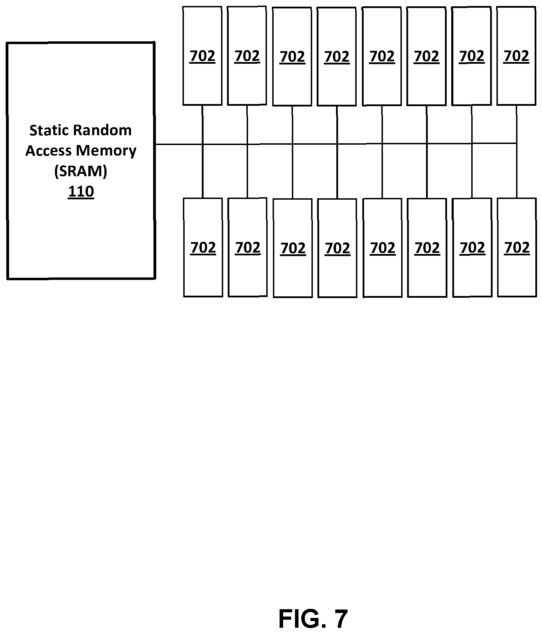

Fig. 7 is a block diagram of an embodiment of a Binary Neural Network accelerator 102 with high parallelism. In the Binary Neural Network accelerator 102 described in conjunction with Figs. 1-3, two bits are multiplied by performing an Exclusive NOR (XNOR) operation in on the binary encodings (0, 1). The XNOR operation consumes significantly less energy than the access to Static Random Access Memory 110, the data movement and the accumulation operation. The parallelism of the Binary Neural Network accelerator 102 is increased to amortize the cost of memory and data movement across many binary operations.

Referring to Fig. 7, data is moved from the static Random Access Memory 110 through a bus or interconnect in parallel to a plurality of 1 bit MACs 702 that each perform an Exclusive NOR (XNOR) operation. In an embodiment there are 256 1 bit MACs 702. The 256 1 bit MACs 702 that perform 256 MAC operations in parallel is comparable to a typical 8 bit integer Neural Network accelerator with four 8 bit multiply accumulate (MAC) units in terms of energy and area

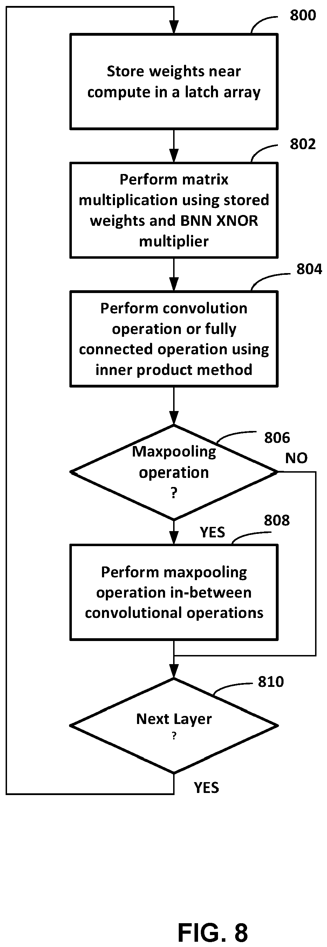

Fig. 8 is a flowgraph illustrating an embodiment of a method to provide an energy efficient binary neural network circuit.

At block 800, weights are stored near compute in a near memory latch array 204 as shown in Fig. 2

At block 802, matrix multiplication is performed using the stored weights and a binary neural network Exclusive NOR multiplier.

At block 804, a convolutional operation or fully connected operation is performed using an inner product method.

At block 806, if a max-pooling operation is to be performed, processing continues with block 808. If not, processing continues with block 810.

At block 808, a max-pooling operation is performed in-between convolutional operations.

At block 810, if there is another layer to be processed, processing continues with block 800 to process the next layer. If not, processing is complete.

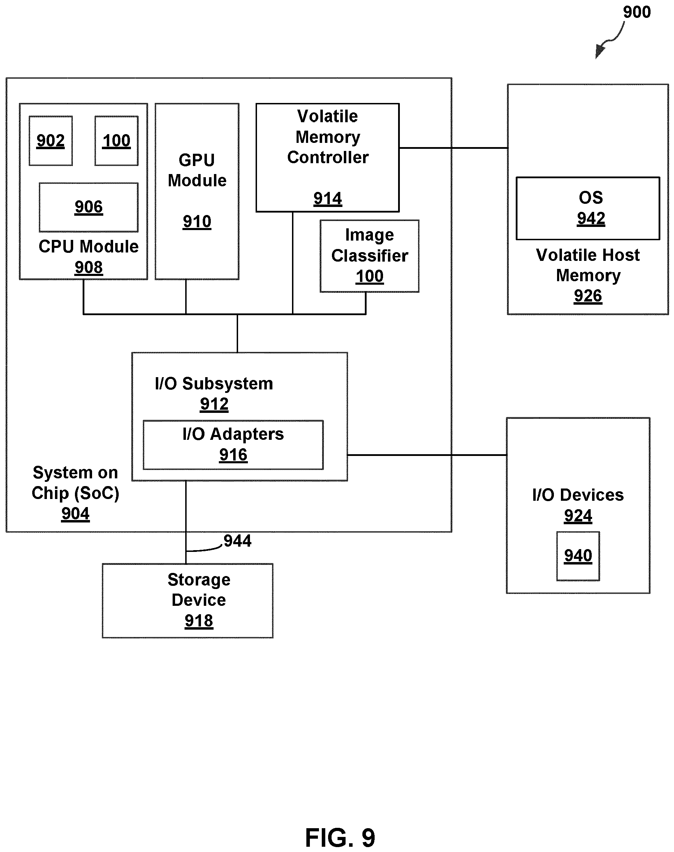

Fig. 9 is a block diagram of an embodiment of a computer system 900 that includes the image classifier 100 shown in Fig. 1. Computer system 900 can correspond to a computing device including, but not limited to, a server, a workstation computer, a desktop computer, a laptop computer, and/or a tablet computer.

The computer system 900 includes a system on chip (SOC or SoC) 904 which combines processor, graphics, memory, and Input/Output (I/O) control logic into one SoC package. The SoC 904 includes at least one Central Processing Unit (CPU) module 908, a volatile memory controller 914, a Graphics Processor Unit (GPU) 910 and the image classifier 100. In other embodiments, the volatile memory controller 914 can be external to the SoC 904. The CPU module 908 includes at least one processor core 902 and a level 2 (L2) cache 906. In an embodiment, the image classifier 100 can be included in the CPU module 908.

Although not shown, each of the processor core(s) 902 can internally include one or more instruction/data caches, execution units, prefetch buffers, instruction queues, branch address calculation units, instruction decoders, floating point units, retirement units, etc. The CPU module 908 can correspond to a single core or a multi-core general purpose processor, such as those provided by Intel® Corporation, according to one embodiment.

The Graphics Processor Unit (GPU) 910 can include one or more GPU cores and a GPU cache which can store graphics related data for the GPU core. The GPU core can internally include one or more execution units and one or more instruction and data caches. Additionally, the Graphics Processor Unit (GPU) 910 can contain other graphics logic units that are not shown in Fig. 9, such as one or more vertex processing units, rasterization units, media processing units, and codecs.

Within the I/O subsystem 912, one or more I/O adapter(s) 916 are present to translate a host communication protocol utilized within the processor core(s) 902 to a protocol compatible with particular I/O devices. Some of the protocols that adapters can be utilized for translation include Peripheral Component Interconnect (PCI)-Express (PCIe); Universal Serial Bus (USB); Serial Advanced Technology Attachment (SATA) and Institute of Electrical and Electronics Engineers (IEEE) 1594 "Firewire".

The I/O adapter(s) 916 can communicate with external I/O devices 924 which can include, for example, user interface device(s) including a display and/or a touch-screen display 940, printer, keypad, keyboard, communication logic, wired and/or wireless, storage device(s) 918 including hard disk drives ("HDD"), solid-state drives ("SSD"), removable storage media, Digital Video Disk (DVD) drive, Compact Disk (CD) drive, Redundant Array of Independent Disks (RAID), tape drive or other storage device. The storage devices can be communicatively and/or physically coupled together through one or more buses using one or more of a variety of protocols including, but not limited to, SAS (Serial Attached SCSI (Small Computer System Interface)), PCIe (Peripheral Component Interconnect Express), NVMe (NVM Express) over PCIe (Peripheral Component Interconnect Express), and SATA (Serial ATA (Advanced Technology Attachment)).

Additionally, there can be one or more wireless protocol I/O adapters. Examples of wireless protocols, among others, are used in personal area networks, such as IEEE 802.15 and Bluetooth, 4.0; wireless local area networks, such as IEEE 802.11-based wireless protocols; and cellular protocols.

A non-volatile memory (NVM) device is a memory whose state is determinate even if power is interrupted to the device. In one embodiment, the NVM device can comprise a block addressable memory device, such as NAND technologies, or more specifically, multi-threshold level NAND flash memory (for example, Single-Level Cell ("SLC"), Multi-Level Cell ("MLC"), Quad-Level Cell ("QLC"), Tri-Level Cell ("TLC"), or some other NAND). A NVM device can also include a byte-addressable write-in-place three dimensional crosspoint memory device, or other byte addressable write-in-place NVM devices (also referred to as persistent memory), such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

The I/O adapters 916 can include a Peripheral Component Interconnect Express (PCIe) adapter that is communicatively coupled using the NVMe (NVM Express) over PCIe (Peripheral Component Interconnect Express) protocol over bus 944 to a host interface 928 in the storage device(s) 918. Non-Volatile Memory Express (NVMe) standards define a register level interface for host software to communicate with a non-volatile memory subsystem (for example, a Solid-state Drive (SSD)) over Peripheral Component Interconnect Express (PCIe), a highspeed serial computer expansion bus). The NVM Express standards are available at www.nvmexpress.org. The PCIe standards are available at www.pcisig.com.

Volatile memory is memory whose state (and therefore the data stored in it) is indeterminate if power is interrupted to the device. Dynamic volatile memory requires refreshing the data stored in the device to maintain state. One example of dynamic volatile memory includes DRAM (Dynamic Random Access Memory), or some variant such as Synchronous DRAM (SDRAM). A memory subsystem as described herein can be compatible with a number of memory technologies, such as DDR3 (Double Data Rate version 3, original release by JEDEC (Joint Electronic Device Engineering Council) on June 27, 2007). DDR4 (DDR version 4, initial specification published in September 2012 by JEDEC), DDR4E (DDR version 4), LPDDR3 (Low Power DDR version3, JESD209-3B, August 2013 by JEDEC), LPDDR4) LPDDR version 4, JESD209-4, originally published by JEDEC in August 2014), WIO2 (Wide Input/Output version 2, JESD229-2 originally published by JEDEC in August 2014, HBM (High Bandwidth Memory, JESD325, originally published by JEDEC in October 2013, DDR5 (DDR version 5, currently in discussion by JEDEC), LPDDR5 (currently in discussion by JEDEC), HBM2 (HBM version 2), currently in discussion by JEDEC, or others or combinations of memory technologies, and technologies based on derivatives or extensions of such specifications. The JEDEC standards are available at www.jedec.org.

An operating system 142 is software that manages computer hardware and software including memory allocation and access to I/O devices. Examples of operating systems include Microsoft® Windows®, Linux®, iOS® and Android®.

The fully digital Compute Near Memory Binary Neural Network accelerator offer orders of magnitude greater energy efficiency compared to floating point and multi-bit integer based neural networks. The high energy efficiency Binary Neural Network optimized hardware accelerators offer is well suited for edge and Internet of Things (IOT) applications where energy efficiency is critical for operation for example, battery powered devices such as drones or wearables. Thermally limited applications such as wearable devices or thermally throttled server accelerators are also ideal use cases.

The fully digital Compute Near Memory Binary Neural Network accelerator achieves energy efficiencies comparable to or surpassing analog based Binary Neural Network accelerators. The fully digital design is more process scalable, robust to PVT (process, voltage, temperature) variations, not vulnerable to circuit noise, and requires lower design effort. The Compute Near Memory Binary Neural Network accelerator works over a wide range of voltage operation points for energy and performance tradeoff. The fully digital Compute Near Memory Binary Neural Network accelerator also achieves high area efficiency (TOPS/mm²) largely because of the high area cost of passive analog components like capacitors and resistors as well as the requirement for larger devices to improve device matching.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to the disclosed embodiments and implementations of the invention without departing from their scope.

Therefore, the illustrations and examples herein should be construed in an illustrative, and not a restrictive sense. The scope of the invention should be measured solely by reference to the claims that follow.

## Claims

1. A neural network accelerator comprising:
a binary convolutional neural network comprising:
a plurality of execution units; and
a near memory latch array comprising a plurality of sets of latches finely interleaved with the plurality of execution units to reduce energy consumption and enable a high bandwidth memory access to the plurality of execution units, a set of latches communicatively coupled to each of the plurality of execution units to store a result of a matrix multiplication in the execution unit.

2. The neural network accelerator of Claim 1, wherein each of the plurality of execution units to perform the matrix multiplication using an inner product.

3. The neural network accelerator of Claim 1, wherein a convolutional operation to shift a weight filter by a stride over an input image in a snake like pattern.

4. The neural network accelerator of Claim 3, wherein a max-pooling operation to be performed in-between convolutional operations.

5. The neural network accelerator of Claim 4, wherein the max-pooling operation uses a sign-bit to select a maximum number for a subregion.

6. The neural network accelerator of Claim 1, wherein the binary convolutional neural network further comprising:
a memory to store an input image, a first power rail from a power source to provide a first power to the memory, the first power rail separate from a second power rail to provide a second power to the binary convolutional neural network.

7. The neural network accelerator of Claim 6, wherein the memory has a plurality of banks to store the input image with each input in a window mapped to a different memory bank to enable a single cycle access to the window.

8. The neural network accelerator of Claim 1, wherein the binary convolutional neural network to use lightweight pipelining to optimize for energy efficiency.

9. The neural network accelerator of Claim 1, wherein the binary convolutional neural network further comprising:
a memory to store an input image, a number of operations performed per bit read from the memory is greater than or equal to 128 to optimize for energy efficiency by amortizing cost of memory access and data movement across many binary neural network operations.

10. A method comprising:
interleaving a plurality of sets of latches with a plurality of execution units to reduce energy consumption and enable a high bandwidth memory access to the plurality of execution units; and
communicatively coupling a set of latches to each of the plurality of execution units to store a result of a matrix multiplication in the execution unit.

11. The method of Claim 10, further comprising:
performing, by each of the plurality of execution units, the matrix multiplication using an inner product.

12. The method of Claim 10, further comprising:
shifting, by a convolutional operation, a weight filter by a stride over an input image in a snake like pattern.

13. The method of Claim 12, further comprising:
performing a max-pooling operation in-between convolutional operations.

14. An apparatus comprising means for performing the methods of any one of claims 10 to 13.
